# EUROPÄISCHE PATENTSCHRIFT

(11) **EP 3 276 080 B1**
(45) Veröffentlichungstag und Bekanntmachung des Hinweises auf die Patenterteilung: **04.12.2019**
(21) Anmeldenummer: 16181628.5
(22) Anmeldetag: 28.07.2016
(51) Int. Cl.: E01C 19/48, G01C 9/08

(54) **SENSORSYSTEM FÜR EINEN STRASSENFERTIGER**
SENSOR SYSTEM FOR AN ASPHALT PAVING MACHINE
SYSTÈME DE CAPTEURS POUR UNE FINISSEUSE DE ROUTE

(43) Veröffentlichungstag der Anmeldung: 31.01.2018
(73) Patentinhaber: MOBA Mobile Automation AG, 65555 Limburg (DE)
(72) Erfinder: Ruppel, Jörg, 65555 Limburg (DE); Zarniko, Martin, 65555 Limburg (DE); Duchscherer, Leander, 65555 Limburg (DE)
(74) Vertreter: Zimmermann, Tankred Klaus

(56) Entgegenhaltungen:
- US-A- 5 044 820
- US-A1- 2011 085 859
- US-A1- 2013 080 112

## Beschreibung

Ausführungsbeispiele der vorliegenden Erfindung beziehen sich auf ein Sensorsystem für einen Straßenfertiger sowie auf einen Straßenfertiger und Sensorsystem. Bevorzugte Ausführungsbeispiele beziehen sich auf einen beschleunigungskompensierten Querneigungssensor. Weitere Ausführungsbeispiele beziehen sich auf ein Verfahren zum Ausgeben eines beschleunigungskompensierten Neigungssignals für einen Straßenfertiger.

Beim Einbau eines Straßenbelags mittels eines Straßenfertigers kommt es häufig zu der Situation, dass dieser einen vorgegebenen Neigungswinkel (z. B. für eine Straßenseite) aufweisen soll. Der Neigungswinkel wird durch einen Querneigungssensor an der Bohle oder an einer Quertraverse, die eine Verbindung zwischen dem linken und dem rechten Zugarm der Bohle darstellt, geregelt. Zusätzlich kann auch die Breite der derzeit zu fertigenden Straße variieren. Dies kann mit einer variablen Bohlenbreitenverstellung, bei der die Seitenteile der Bohle mittels Hydraulik aus- und eingefahren werden, erfolgen.

Beim Betätigen der Bohlenbreitenverstellung arbeitet der variable Teil der Bohle gegen den mittleren Teil der Bohle. Da hier enorme Kräfte notwendig sind, gibt es immer wieder Beschleunigungen in Querrichtung. Ein weiterer Grund für Querbeschleunigungen könnte auch das Ein- und Ausschalten der Verteilerschnecke, welche zur Verteilung des Baumaterials vor der Bohle dient, sein oder eine seitliche Verschiebung der Schneckenanordnung, wie bspw. in der DE 10 2014 014 384 A1 beschrieben. Diese Beschleunigungen wirken auf den Querneigungssensor und verursachen große Störungen.

Die US 2011/0085859 beschreibt ein Steuerungssystem für einen Straßenfertiger unter Verwendung von Lasermesssensoren und Neigungssensoren.

Die US 2013/0080112 beschreibt ein Sensorsystem bei dem die Neigung fortlaufend kompensiert wird.

Ein ähnlicher Fehler tritt auf, wenn der Straßenfertiger ruckartig bzw. abrupt um die Kurve fährt. Dies passiert z.B. bei sehr engen Kurven, bei Fertigung von Straßenkreiseln oder bei Lenkfehlern. Durch die Konstruktion von üblichen Straßenfertigern ist gegeben, dass die Bohle einen großen Abstand zum Drehpunkt hat und somit durch extreme Lenkbewegungen Querbeschleunigungen, welche zu Störungen bei der Querneigung führen, an der Bohle auftreten.

Damit diese Störungen nicht die Messwerte des Querneigungssensors beeinflussen, wird der Sensor extrem gefiltert und mit einer großen Verzögerungszeit eingestellt. Dies hat zum Nachteil, dass die Regelung sehr langsam reagiert. Wird die Regelung dynamischer eingestellt (weniger große Verzögerungszeit), muss der Anwender bei den genannten Einbausituationen die Reglung ausschalten, da es sonst zu gravierenden Regelabweichungen kommen kann. Die Qualität einer Straße bzw. eines eingebauten Straßenbelags lässt sich aber nur über einen gesamten Straßenabschnitt bestimmen. Soll eine gute Qualität erreicht werden, muss der Straßenabschnitt mit einer konstanten Geschwindigkeit gefertigt werden. Ist die Regelung sehr langsam eingestellt, dann muss der Fertiger auch sehr langsam fahren, was zu einem deutlich langsameren Einbauprozess führt. Bei einer dynamischen Reglung gibt es immer wieder Bereiche, in denen die Regelung ausgeschaltet wurde oder eine Regelabweichung vorhanden war, was zu einer Reduzierung der Qualität der Straße bzw. des eingebauten Straßenbelags führt.

Ein weiterer Punkt ist, dass Fertiger oft mit zwei unterschiedlichen Regelsystemen ausgestattet sind. So ist es üblich, dass auf der einen Seite des Straßenfertigers ein Höhenregler angebracht ist, der die Einbauhöhe über einer Höhenreferenz (Bordsteinkante, Referenzseil, Referenzuntergrund, ...) regelt, wohingegen die Höhe der zweiten Seite über den Querneigungssensor geregelt wird. Ändert sich nun die Höhenreferenz, regelt die Seite mit dem Höhensensor die Änderung recht schnell aus. Da der Neigungssensor eine sehr große Zeitkonstante aufweist, kann nur sehr langsam nachgeregelt werden. Dies hat zur Folge, dass es in dem Bereich, in dem sich die Höhenreferenz geändert hat, eine Verwindung in der Straße gibt. Um dies zu vermeiden, wird hier üblicherweise kurzzeitig die Einbaugeschwindigkeit stark reduziert.

Deshalb besteht der Bedarf nach einem verbesserten Konzept. Die Aufgabe der vorliegenden Erfindung ist es, ein Konzept zu schaffen, das eine zuverlässige Neigungsregelung für Straßenfertiger mit einer Bohle bzw. für einen Straßenfertiger mit ausfahrbarer Bohle, selbst im Ausfahr- oder Einfahrzustand der Seitenteile, sicherstellt.

Die Aufgabe wird durch die unabhängigen Patentansprüche gelöst.

Ausführungsbeispiele der vorliegenden Erfindung schaffen ein Sensorsystem für einen Straßenfertiger mit einer Bohle, vorzugsweise mit einer ausfahrbaren Bohle. Das Sensorsystem umfasst mindestens einen Neigungssensor, einen Drehratensensor und eine Berechnungseinheit. Der mindestens eine Neigungssensor ist ausgebildet, um eine Neigung der Bohle oder einer mit zu der Bohle gekoppelten Einrichtung, wie z.B. einer Quertraverse (an den Zugarmarmen zwischen Bohle und Straßenfertiger zur Befestigung der Bohle am Straßenfertiger) zu ermitteln und mindestens ein Neigungssignal (intern) bereitzustellen. Der Drehratensensor ist ausgebildet, um eine an der Bohle vorherrschende Neigungsänderung bzw. Winkeländerung oder Winkelgeschwindigkeit (Drehrate) zu ermitteln und ein Drehratensignal (intern) bereitzustellen. Ausgehend von dem Neigungssignal und dem Drehratensignal wird ein beschleunigungskompensiertes Neigungssignal berechnet und ausgegeben.

Ausführungsbeispielen der vorliegenden Erfindung liegt die Erkenntnis zugrunde, dass das Signal eines Neigungssensors mittels einer Berechnungseinheit, die als weitere Eingangsgröße ein Signal über die vorherrschende Drehrate erhält, hinsichtlich Störeinflüssen (z.B. resultierend aus Querbeschleunigung, wie z. B. beim Ausfahren einer Bohle) korrigiert werden kann. Hierzu werden die zwei Signale vom Neigungssensor und vom Drehratensensor, z. B. durch einen Kalman-Filter, kombiniert bzw. miteinander verrechnet, so dass dann als Resultat ein beschleunigungskompensiertes Neigungssignal ausgegeben werden kann. Dieses beschleunigungskompensierte Neigungssignal kann dann zuverlässig zur Regelung der Querneigung der Einbaubohle eines Straßenfertigers verwendet werden.

Das Neigungssignal wird durch einen Neigungssensor oder durch die Kombination mehrerer Neigungssensoren derselben Bauart, um eine höhere Sicherheit (Redundanz) zu erzeugen, oder unterschiedlicher Bauart, um systematische Fehler zu korrigieren, zur Verfügung gestellt.

Das Sensorsystem umfassend mindestens einen Neigungssensor und einen Drehratensensor gibt somit nur noch die tatsächliche Neigung der Bohle bzw. der Quertraverse aus und wird nicht mehr durch jegliche Art von Querbeschleunigungen, wie z.B. das Verstellen der Bohle (Aus- und Einfahren von Variobohlenteilen), und die damit hervorgerufene Beschleunigung bei der Bohlenbreitenverstellung beeinflusst. Somit können die Regelparameter für die Querneigung wesentlich dynamischer eingestellt werden. Durch Verringerung der Verzugszeit, bzw. durch die Reduzierung der Verzögerung kann ein Aufschwingen der Regelstrecke verhindert werden.

An dieser Stelle sei angemerkt, dass der Drehratensensor dazu ausgebildet ist, die Drehrate unabhängig von Querbeschleunigungen, die von dem Verstellvorgang (Ein-/Ausfahren) hervorgerufen werden, zu bestimmen, um dann im Nachgang eine Korrektur des Neigungssignals, d. h. anzeigend (oder zumindest indirekt anzeigend) die Bohlenneigung (Neigung quer in Bezug auf die Fahrtrichtung) zu ermöglichen, aber auch um weitere Querbeschleunigungseffekte, wie z. B. resultierend aus Kurvenfahrten, zu erkennen.

Entsprechend Ausführungsbeispielen sind der mindestens eine Neigungssensor und/oder der Drehratensensor mechanisch mit der Bohle gekoppelt.

Entsprechend Ausführungsbeispielen sind der mindestens eine Neigungssensor und/oder der Drehratensensor auf einer Quertraverse des Straßenfertigers angeordnet.

Entsprechend Ausführungsbeispielen sind der mindestens eine Neigungssensor und der Drehratensensor in einem gemeinsamen Gehäuse angeordnet. Ein bevorzugtes Ausführungsbeispiel ist die Anordnung des mindestens einen Neigungssensors, des Drehratensensors und der Berechnungseinheit in einem gemeinsamen Gehäuse. Dieses Gehäuse (bzw. allgemein der mindestens eine Neigungssensor und/oder der Drehratensensor) ist/sind entsprechend bevorzugten Ausführungsbeispielen mechanisch mit der Bohle gekoppelt oder direkt auf selbiger angeordnet. Die Kopplung kann entsprechend Ausführungsbeispielen dadurch erfolgen, dass das Gehäuse (bzw. der mindestens eine Neigungssensor und/oder der Drehratensensor) auf einer Quertraverse der Bohle angeordnet ist/sind. Dies hat zum Vorteil, das bei Stillstand des Fertigers das Regelsystem eine Rückführung bekommt. Eine Anordnung bzw. Montage des Gehäuses (bzw. des mindestens einen Neigungssensors und/oder Drehratensensors) auf der Bohle hat bei einer Verstellung der Zugarme im Stillstand des Fertigers keine Änderung zur Folge, da die Bohle schwimmend gelagert ist und sich somit in ihrer Lage nicht verändern würde. Auch ist bei Einbau eines Dachprofils, welches oft bei schmalen Landstraßen verwendet wird, eine Montage des Gehäuses (bzw. des mindestens einen Neigungssensors und/oder Drehratensensors) auf der Bohle nicht von Vorteil, da sich die Bohlenteile in unterschiedlicher Richtung quer zur Fahrtrichtung des Fertigers neigen. Die Quertraverse dagegen ist unabhängig von der Einstellung des Straßenprofils.

Entsprechend Ausführungsbeispielen ist die Berechnungseinheit dazu ausgebildet, die Querbeschleunigung auf die Bohle und/oder die Querbeschleunigung resultierend aus einem Einfahren oder Ausfahren der Bohle zu ermitteln. Die auf die Bohle wirkende Querbeschleunigung wird von dem mindestens einen Neigungssensor erfasst, da Neigungssensoren - wie eingangs ausführlich beschrieben - auch eine in der Messachse auftretende Beschleunigung messen bzw. erfassen.

Entsprechend Ausführungsbeispielen kann der Drehratensensor z. B. als Kreiselsensor, als Gyroskop-Sensor oder als Drehratensensor auf MEMS-Basis realisiert sein. Der mindestens eine Neigungssensor kann als Servo-Inclinometer, z.B. Spannbandsensor, oder als flüssigkeitsbasierter Neigungssensor, als Feder-Masse-System oder als Beschleunigungssensor auf mikromechanischer Basis (MEMS Inclinometer) realisiert sein.

Die Berechnungseinheit kann im einfachsten Fall durch einen Kalman-Filter oder einem entsprechendem anderen mathematischen Algorithmus realisiert sein. Entsprechend weiteren Ausführungsbeispielen ist die Berechnungseinheit dazu ausgebildet, um das beschleunigungskompensierte Neigungssignal ausgehend von einer Funktion umfassend das Neigungssignal selbst und über das Integral das Drehratensignal zu berechnen.

Das Neigungssignal kann entsprechend Ausführungsbeispielen dazu genutzt werden, um die Neigungsregelung/Höhenregelung der Bohle vorzunehmen. Deshalb ist das Sensorsystem entsprechend Ausführungsbeispielen mit einer Steuerung verbunden, die ausgebildet ist, um einen Aktor, z.B. einen Hydraulikzylinder des Zugarms, zur Höhenregelung der Bohle und/oder zur Neigungsregelung der Bohle zu steuern.

Ein weiteres Ausführungsbeispiel bezieht sich auf einen Straßenfertiger mit einer Bohle, vorzugsweise mit einer ausfahrbaren Bohle, und einem Sensorsystem, wie es oben skizziert wurde.

Ein weiteres Ausführungsbeispiel bezieht sich auf ein Verfahren zum Ausgeben eines beschleunigungskompensierten Neigungssignals für einen Straßenfertiger mit einer Bohle, vorzugsweise mit einer ausfahrbaren Bohle. Das Verfahren umfasst die Schritte: Ermitteln einer Neigung der Bohle mittels mindestens eines Neigungssensors und Bereitstellen mindestens eines Neigungssignals, sowie Ermitteln einer an der Bohle vorherrschenden Drehrate mittels eines Drehratensensors und Bereitstellen eines Drehratensignals. Der letzte Schritt ist das Berechnen des beschleunigungskompensierten Neigungssignals auf Basis des mindestens einen Neigungssignals und des Drehratensignals sowie Ausgeben desselben.

Weiterbildungen sind in den Unteransprüchen definiert. Ausführungsbeispiele der vorliegenden Erfindung werden anhand der nachfolgenden Zeichnungen erläutert. Es zeigen:
- Fig. 1a: ein Blockschaltbild eines Sensorsystems mit einem Neigungssensor und einem Drehratensensor gemäß einem Ausführungsbeispiel;
- Fig. 1b, 1c: Darstellungen von Fahrbahnbelägen zur Illustration der Notwendigkeit der Höhen- und/oder Neigungsregelung beim Straßenbau;
- Fig. 2a: ein Blockschaltbild eines Spannbandsensors zur Verwendung als Neigungssensor gemäß einem Ausführungsbeispiel;
- Fig. 2b: ein schematisches Blockschaltbild einer Berechnungseinheit zur Illustration des Berechnungsverfahrens gemäß einem Ausführungsbeispiel;
- Fig. 3a-3c: schematische Darstellungen von Straßenfertigern zur Illustration der korrekten Position des Neigungssensors gemäß einem Ausführungsbeispiel; und
- Fig. 4a, 4b: Diagramme von Neigungssensorsignalen gemäß Ausführungsbeispielen gegenübergestellt zu Stand-der-Technik-Neigungssensorsignalen.

Bevor nachfolgend Ausführungsbeispiele der vorliegenden Erfindung anhand der Figuren im Detail erläutert werden, sei darauf hingewiesen, dass gleichwirkende Elemente mit gleichen Bezugszeichen versehen sind, so dass die Beschreibung derer aufeinander anwendbar bzw. austauschbar ist.

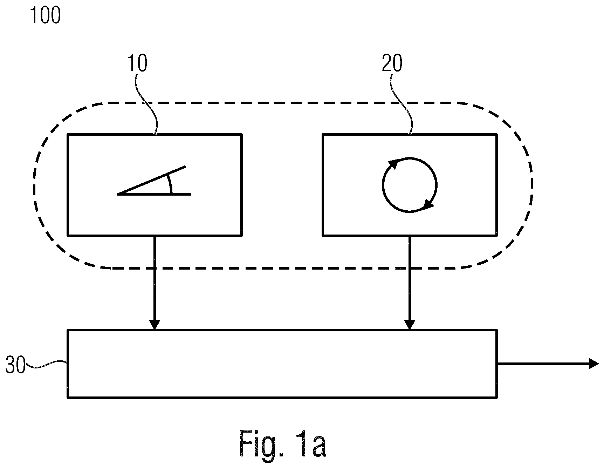

Fig. 1a zeigt ein Sensorsystem 100 mit einem Neigungssensor 10 und einem Drehratensensor 20. Die beiden Sensoren 10 und 20 geben ihr Sensorsignal an die Berechnungseinheit 30 aus.

Der Neigungssensor 10, der beispielsweise als Flüssigkeitssensor, Feder-Masse-System oder Servo-Inclinometer (Spannbandsensor) realisiert ist, ermittelt die Neigung des Sensors und, da der Sensor an der Bohle des Straßenfertigers vorzugsweise an der Quertraverse, befestigt ist, die Neigung der Bohle. Bevorzugt wird die Querneigung ermittelt. Dieses Neigungssignal variiert in Abhängigkeit von der aktuellen Neigung der Bohle über die Zeit, d.h. über die zurückgelegte Wegstrecke. Das Neigungssignal wird an die Berechnungseinheit 30 zur Weiterverarbeitung weitergeleitet. Wie oben bereits erläutert, hat allerdings auch eine Querbeschleunigung Einfluss auf den Neigungssensor 10 und dessen Messwerte.

Deshalb ist der Neigungssensor 10 mit einem Drehratensensor 20, z. B. einem Kreiselsensor, Gyroskop-Sensor oder Drehratensensor auf MEMS Basis, kombiniert, so dass im Nachgang das Sensorsignal des Neigungssensors 10 korrigiert werden kann. Diese Korrektur erfolgt in der Berechnungseinheit 30. Deshalb gibt der Drehratensensor 20 sein Drehratensignal an die Berechnungseinheit 30 aus. An dieser Stelle sei angemerkt, dass der Drehratensensor 20 typischerweise die auf die Bohle wirkenden Drehrate bzw. die von der Bohle herrührenden Drehrate misst. Wenn keine Drehrate vorhanden ist, muss eine Änderung beim Neigungssensor durch eine Querbeschleunigung hervorgerufen worden sein. Diese entstehen beispielsweise durch Ausfahren und Einfahren der Bohle bzw. der seitlichen Bohlenteile. Auch entstehen derartige Querbeschleunigungen beim Betrieb der Förderschnecke für den aufzubringenden Straßenbelag.

Die Berechnungseinheit 30 überwacht beispielsweise den Drehratensensor 20, um festzustellen, ob eine Drehung auf ihn und damit auch auf den Neigungssensor 10 gewirkt hat und passt in einem solchen Fall das erhaltene Neigungssignal ϕ des Neigungssensors 10 entsprechend an. Hierzu wird beispielsweise das Drehratensignal w aufintegriert, d. h. ∫ ω dt, und mit dem erhaltenen Neigungssignal ϕ abgeglichen. Das Endergebnis ist ein beschleunigungskompensiertes Neigungssignal, ausgehend von welchem der Straßenfertiger gesteuert werden kann (Höhenregelung, Neigungsregelung für die Bohle). Die Regelung kann so wesentlich dynamischer eingestellt werden, da die Querbeschleunigungen bzw. Querkräfte nun keinen Einfluss mehr auf das Neigungssignal haben. Hierbei geht es bevorzugt um die Neigung der Bohle; den geringen Sensorvorhalt in Richtung Zugmaschine/Straßenfertiger braucht man als Stabilitätskriterium des Neigungsreglers, d.h. um bei der Ansteuerung der Zugpunkte immer eine vorzeichenrichtige Messwertänderung zu erhalten.

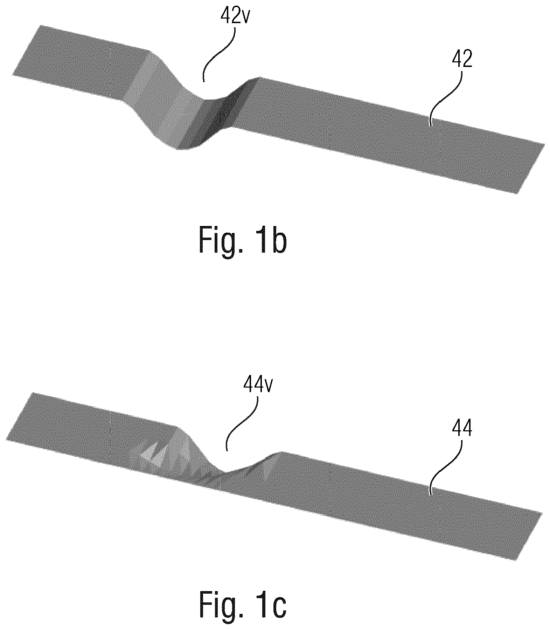

Durch die wesentlich dynamischeren Regelungen können Fehler im eingebauten Straßenbelag vermieden werden, wie anhand von Fig. 1b und 1c gezeigt wird. Fig. 1b zeigt einen Untergrund 42, auf welchem ein Straßenbelag 44 (vgl. Fig. 1c) aufgebracht werden soll. Der Untergrund 42 hat eine Vertiefung 42v, in welche mehr Straßenbelag einzubringen wäre. Hierzu muss allerdings die Regelung hinreichend schnell agieren können. Im Regelfall wird vorne am Straßenfertiger die Höhenregelung vollzogen, während die Neigungsregelung am hinteren Teil erfolgt. Das Ergebnis nach einer gedämpften, tiefpassgefilterten Regelung ist in Fig. 1c gezeigt. Wie zu erkennen ist, hat die Vertiefung 42v wiederum eine Vertiefung in dem aufgebrachten Straßenbelag 44v hinterlassen. Wenn man nun die Regelung für Höhe und Neigung sehr schnell, d. h. nicht tiefpassgefiltert, einstellen könnte, könnte die Vertiefung 42v im Untergrund 42 beim resultierenden Straßenbelag 44 ausgeglichen werden. Hierzu ist es allerdings notwendig, dass auf einem anderen Weg die Störeinflüsse, wie Ausfahren der Bohle, beseitigt werden. Ein derartiger Ansatz ist in Fig. 1a erläutert.

Auch kann durch die Beschleunigungskompensation erreicht werden, dass sich bei ruckartigen bzw. abrupten oder sehr eng gefahrenen Kurvenfahrten, wie sie z.B. bei Verkehrskreiseln auftreten, die Neigungsreglung in diesen Situationen aktiv bleibt, bzw. wesentlich dynamischer ausgeführt werden kann, so dass die Kurve mit der vorgegebenen Neigung aufgebaut werden kann. Im Resultat wäre eine wesentlich bessere Prozesssicherheit gegeben bzw. könnte in den genannten Situationen mit einer größeren Geschwindigkeit gefahren werden, was insgesamt einen positiven Einfluss auf die Gesamteinbaudauer und die Gesamtqualität eines Straßenabschnitts hat.

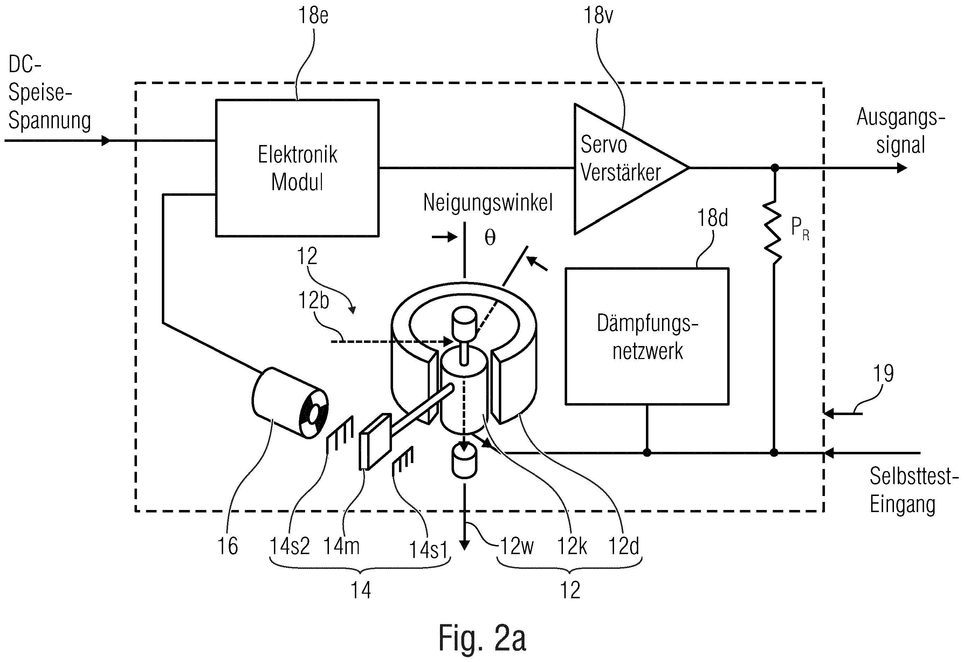

In Fig. 2a ist ein exemplarisch zum Einsatz kommender Neigungssensor 10', welcher im oben erläuterten Sensorsystem 100 eingesetzt werden kann, abgebildet. Der Neigungssensor 10' ist hier als Servo-Inklinometer (Spannbandsensor) ausgeführt. Dabei ist es denkbar, eine Kombination mehrerer Neigungssensoren derselben Bauart oder aber auch unterschiedlicher Bauart zu verwenden.

So ein Spannbandsensor 10' beruht im Wesentlichen auf einem Spannbandmesswerk 12 in Kombination mit einem Pendel 14. Das Spannbandmesswerk 12 umfasst ein Spannband 2b, ein Drehspulensystem 12d sowie einen Kern 12k. Der Kern 12k ist innerhalb des Drehspulensystems 12d unter Zuhilfenahme des Spannbands 12b aufgehängt. Mit dem Kern 12k ist eine Pendelmasse 14m gekoppelt, wobei hier die Pendelmasse mittels eines Arms aus dem Drehspulenmesswerk 12d herausragt. Der Kern 12k und damit auch die Pendelmasse 14m verkippen sich gegenüber der Vertikalachse 12b um den Neigungswinkel ϕ.

Die Pendelmasse 14m an dem Arm kann sich zwischen zwei Stoppanschlägen 14s1 und 14s2 bewegen. Zwischen diesen Stoppanschlägen 14s1 und 14s2 wird die Position der Pendelmasse 14m mittels des Positionssensors 16 bestimmt. Dieser Positionssensor 16 ist mit der Elektronik 18 des Spannbandsensors 10' gekoppelt. Die Elektronik 18 umfasst ein Elektromodul 18e, einen Servoverstärker 18v sowie ein Dämpfungsnetzwerk 18d. Des Weiteren sind noch Anschlüsse für die DC-Speisespannung, das Ausgangssignal und ein Eingang für einen Selbsttest vorgesehen. Wie anhand der gestrichelten Linie gekennzeichnet ist, befinden sich im Regelfall all diese Module 12, 14, 16 und 18 in einem gemeinsamen (abgedichteten) Gehäuse 19.

Bei dem hier dargestellten Spannbandsensor 10' wird nicht die Auslenkung des Pendels 14m gemessen wird, sondern der Strom, der benötigt wird, um das Pendel 14m in die Nullposition zurückzubewegen bzw. dort zu halten. Das Messsignal ist proportional zum Neigungswinkel, der die Abweichung gegenüber der vorgegebenen Lotrichtung darstellt.

Dieses Neigungssignal wird dann, wie oben bzgl. 1a bereits erläutert, mit dem Drehratensignal korrigiert.

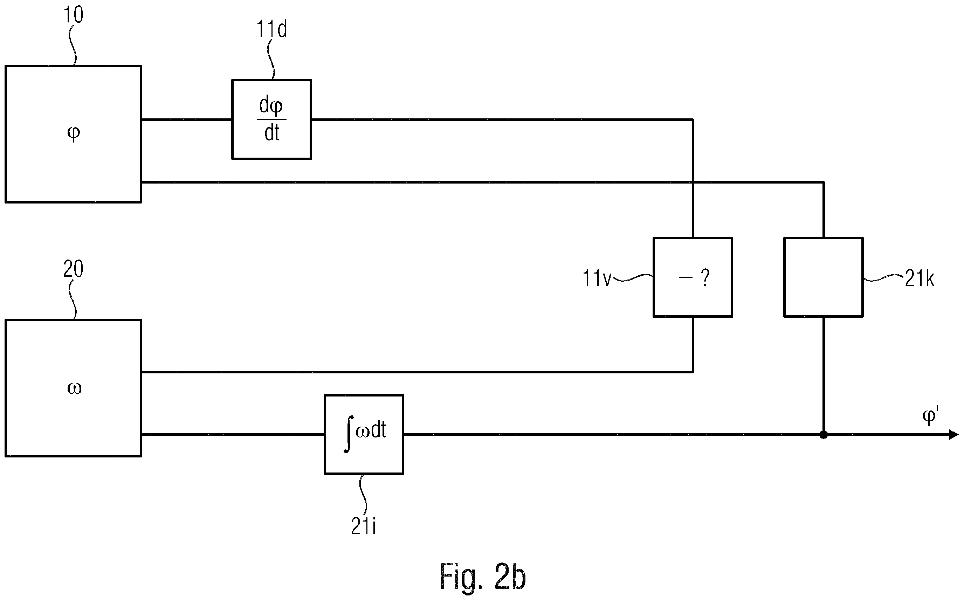

Fig. 2b illustriert eine mögliche Verschaltung, mittels welcher Neigungssensor und Drehratensensor miteinander kombiniert werden können. Der Neigungssensor 10 gibt ein Signal anzeigend ϕ aus, während Drehratensensor 20 ein Signal anzeigend die Drehrate w ausgibt. Das Neigungssignal ϕ wird nach der Zeit abgeleitet (siehe Block 11a) und mit dem Drehratensignal ω verglichen (siehe Block 11v). Anhand dieses Vergleichs 11v ist ersichtlich, ob ausgehend von einer Drehrate ω der Bedarf besteht, das Neigungssignal ϕ zu korrigieren. Diese Korrekturen erfolgen ausgehend von dem Drehratensignal w, z. B. integriert über die Zeit (vgl. Einheit 21i), d. h. ∫ ω dt. Durch Kombination (vgl. 21k) kann dann das korrigierte Neigungssignal ϕ' ausgegeben werden.

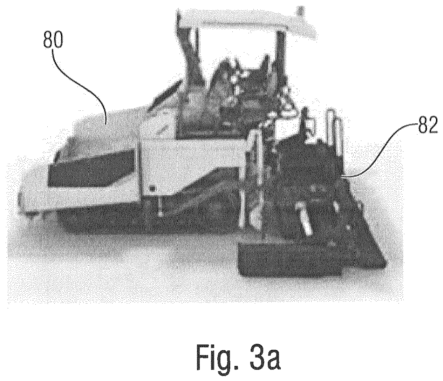

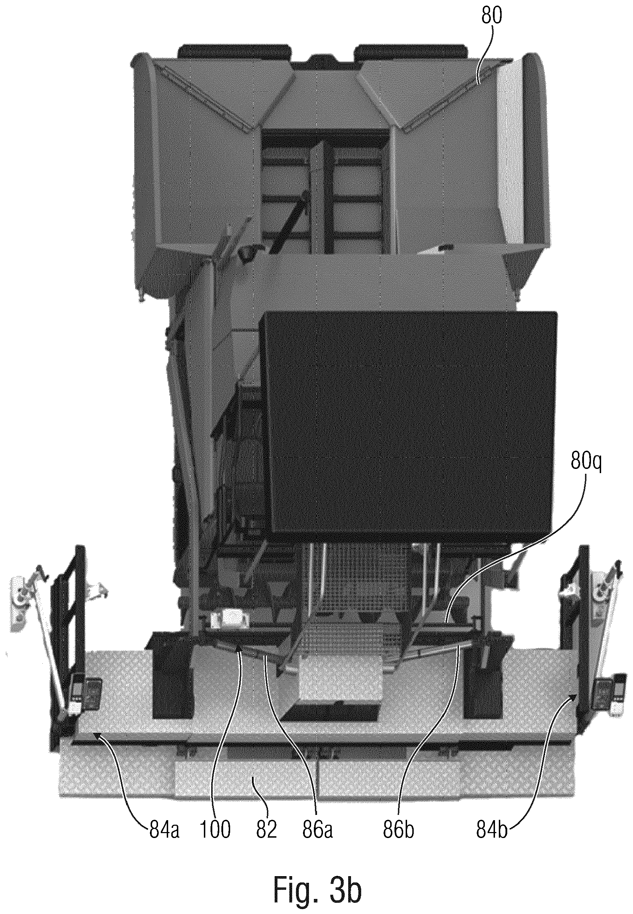

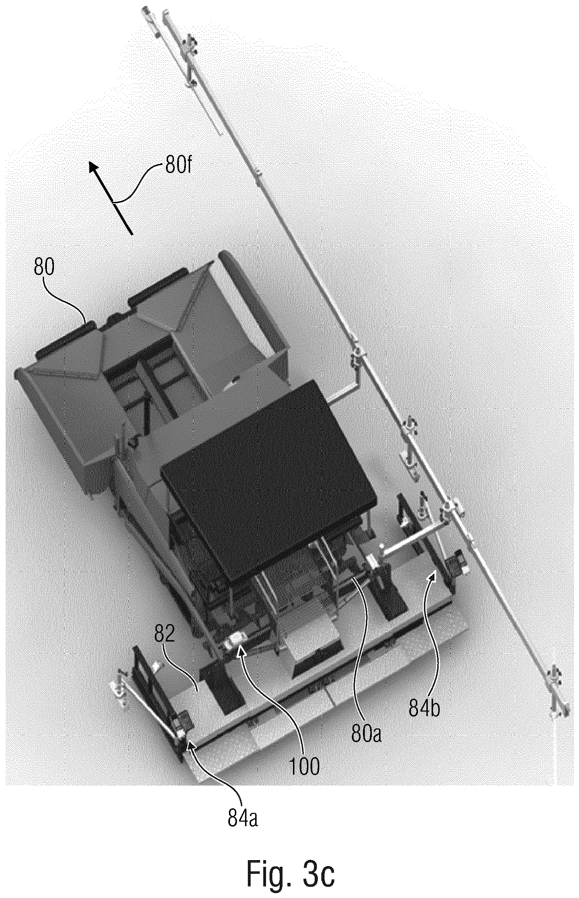

Fig. 3a zeigt einen Straßenfertiger 80 mit einer ausfahrbaren Bohle 82. Der Ausfahrmechanismus der ausfahrbaren Bohle 82 ist anhand von Fig. 3b bzw. 3c zu erkennen. Hierzu weist die Bohle 82 an jeder Seite ausfahrbare Maschinenteile 84a und 84b auf. Die in Querrichtung (bezogen auf die Fahrtrichtung 80f) ausgerichtete Bohle 82 wird durch die ausfahrbaren Maschinenteile 84a und 84b verlängert, wodurch es zu einer Querbeschleunigung kommen kann.

Entsprechend dem bevorzugten Ausführungsbeispiel ist der Drehratensensor zusammen mit dem Neigungssensor in einem gemeinsamen Gehäuse angeordnet, in welchem auch die Elektronik zur Fusion der zwei Sensorsignale vorgesehen sein kann. Der Neigungssensor ist entsprechend einem bevorzugten Ausführungsbeispiel auf der Quertraverse 80q, die eine Verbindung zwischen dem linken und dem rechten Zugarm der Bohle 82 darstellt, angeordnet. Da in diesem Ausführungsbeispiel davon ausgegangen ist, dass der Neigungssensor und der Beschleunigungssensor kombiniert als Sensorsystem auftauchen, hat der angeordnete Sensor das Bezugszeichen 100 für das Sensorsystem.

Durch die Anordnung des Neigungssystems 100 auf der Quertraverse 80q wird die Seitenneigung und Drehung der Bohle 82 ermittelt. Diese steht allerdings in einem direkten Zusammenhang mit der Drehung und Querneigung der Bohle 82, da die Bohle 82 über Zugarme 86a und 86b mit dem Straßenfertigers 80 verbunden sind, wobei zwischen den Zugarmen 86a und 86b die Quertraverse 80q vorgesehen ist. Die Quertraverse kann starr oder über Gelenke mit den Zugarmen 86a und 86b verbunden sein. Diese Zugarme sind verstellbar, so dass so die Neigung der Bohle 82 und die Höhe der Bohle 82 gesteuert werden kann. In anderen Worten ausgedrückt heißt das, dass der Neigungssensor 100 mechanisch mit der Bohle 82 gekoppelt ist.

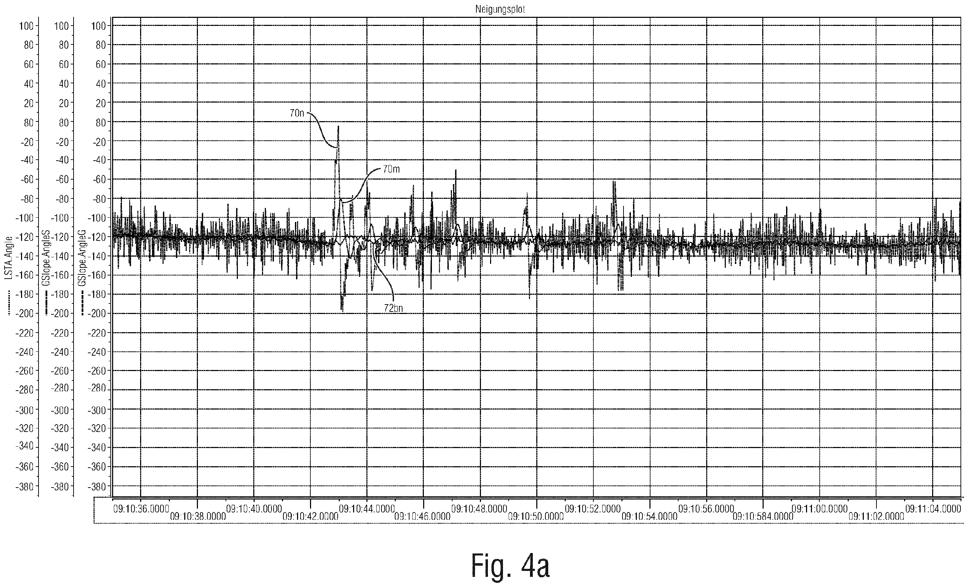

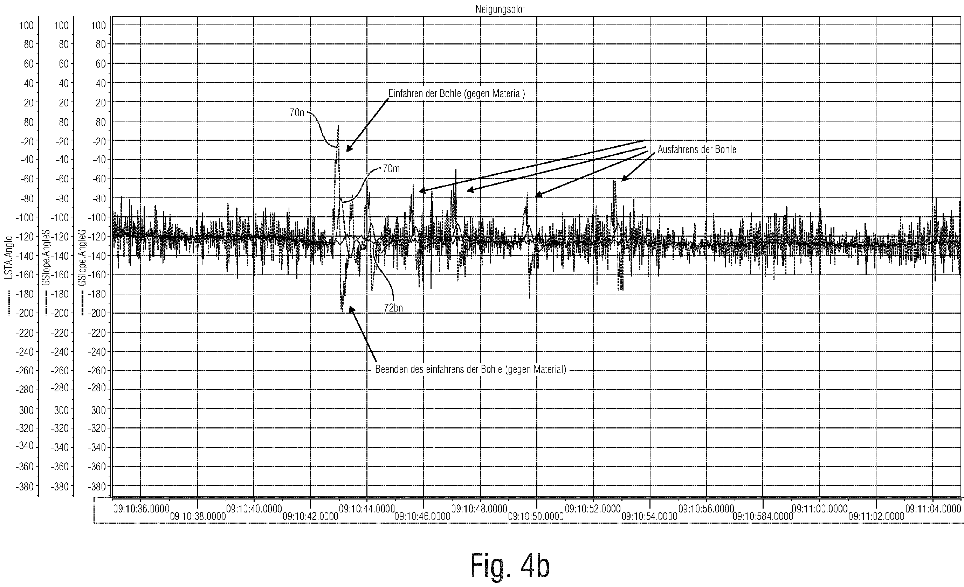

Bezug nehmend auf die Figuren 4a und 4b wird die Effektivität des beschleunigungskompensierten Neigungssensors dargestellt.

Fig. 4a und 4b zeigen jeweils die Sensordaten des Neigungssensors sowie eines beschleunigungskompensierten Neigungssensors, wobei in Fig. 4b die relevanten Punkte bei der Messfahrt hervorgehoben sind. An dieser Stelle sei angemerkt, dass die Sensorsignale hier über die Zeit aufgetragen sind, wobei die zeitliche Dimension gleichbedeutend ist mit der zurückgelegten Wegstrecke des Straßenfertigers.

Die Kurve 70n stellt die Messwerte eines handelsüblichen Neigungssensors dar (hier ein Spannbandsensor), während die Kurve 70m eine Mittelung der Messwerte 70n illustriert, die nach derzeitigem Stand genutzt wird, um die Störeinflüsse zu minimieren. Im Gegensatz dazu zeigt die Kurve 72bn die Position eines Neigungssensors kombiniert mit einem Drehratensensors (Gyro- bzw. Kreiselsensors), also das beschleunigungskompensierte Neigungssignal. Wie zu erkennen ist, ist dieses im Vergleich zu dem Neigungssignal und dem gemittelten Neigungssignal mit wesentlich weniger großen Ausschlägen versehen, die beispielsweise aus dem Einfahren der Bohle gegen Material und aus dem Ausfahren der Bohle herrühren. Diese Einfahr- und Ausfahrvorgänge sind in Fig. 4b kenntlich gemacht.

Die Peaks in der Kurve entstehen dadurch, dass die variable Bohle ausgefahren bzw. eingefahren wurde. Hier noch einmal eine kurze Beschreibung des Aufbaus. Der Fertiger besteht aus einer Zugmaschine (auch Traktor genannt) und einer Bohle. Diese Bohle ist schwimmend gelagert, das bedeutet sie wird im Prinzip nur hinter dem Traktor hergezogen. Es besteht die Möglichkeit den Anstellwinkel der Bohle zu ändern, was zu einem anderen Aufschwimmverhalten führt. Beim Ausfahren des Varioteils der Bohle schiebt eine Hydraulik eine Verlängerung von der Bohle weg. In diesem Fall arbeitet die Hydraulik nur gegen Reibung. Beim Einfahren des Varioteils muss die Hydraulik noch zusätzlich gegen das Material (Asphalt), das vor der Bohle liegt, arbeiten. Daher sind hier wesentlich größer Querbeschleunigungen zu erwarten. Der Sensor ist auf der Querverbindung zwischen dem rechten und dem linken Zugarm montiert und ist dafür vorgesehen die Querneigung der Bohle zu messen (diese Position wurde aus reglungstechnischen Gründen gewählt).

Im Diagramm aus Fig. 4b sieht man deutlich, dass beim Einfahren ein wesentlich größerer Peak entsteht. Hier ist auch am deutlichsten die Wirkung des beschleunigungskompensierten Neigungssensors zu sehen.

Auch wenn obige Ausführungsbeispiele in erster Linie anhand einer Vorrichtung bzw. eines Systems erläutert wurden, sei an dieser Stelle darauf hingewiesen, dass sich die weiteren Ausführungsbeispiele auf ein Verfahren beziehen, dass die Schritte "Ermitteln einer an der Bohle vorherrschenden Neigung und Erkennung einer an der Bohle vorherrschenden Querbeschleunigung" und "Berechnen eines beschleunigungskompensierten Neigungssignals auf Basis des Neigungssignals und des Drehratensignals" umfasst.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sensorsystem (100) für einen Straßenfertiger (80) mit einer ausfahrbaren Bohle (82), mit folgenden Merkmalen:
mindestens einem Neigungssensor (10), der ausgebildet ist, um eine Neigung der Bohle (82) und/oder einer mit der Bohle (82) gekoppelten Einrichtung zu ermitteln und ein Neigungssignal bereitzustellen;
einem Drehratensensor (20), der ausgebildet ist, um eine an der Bohle (82) vorherrschende Drehrate bzw. Neigungsänderung zu ermitteln und ein Drehratensignal bereitzustellen;
wobei der Drehratensensor (20) dazu ausgebildet ist, die Drehrate unabhängig von Querbeschleunigungen, die beim Ein- und Ausfahren der Bohle hervorgerufen werden, zu bestimmen; und
eine Berechnungseinheit (30), die ausgebildet ist, um auf Basis des Neigungssignals und des Drehratensignals ein beschleunigungskompensiertes Neigungssignal zu berechnen und auszugeben, **dadurch gekennzeichnet, dass** das Berechnen erfolgt, indem das Neigungssignal nach der Zeit abgeleitet wird und mit dem Drehratensignal verglichen wird, um anhand des Vergleichs zu ermitteln, ob der Bedarf besteht, das Neigungssignal zu korrigieren; und indem die Korrektur des Neigungssignals dadurch erfolgt, dass das Drehratensignal über die Zeit integriert wird und nach Kombination mit dem Neigungssignal als korrigiertes Neigungssignal ausgegeben zu werden.

2. Sensorsystem (100) gemäß Anspruch 1 , wobei die Berechnungseinheit (30) ausgebildet ist, die Querbeschleunigung auf die Bohle (82) und/oder die Querbeschleunigung resultierend aus einem Einfahren oder Ausfahren der Bohle (82) zu ermitteln.

3. Sensorsystem (100) gemäß Anspruch 1 oder 2, wobei der Drehratensensor (20) als Kreiselsensor, als Gyroskop-Sensor oder als Drehratensensor auf MEMS-Basis realisiert ist.

4. Sensorsystem (100) gemäß einem der vorherigen Ansprüche, wobei der mindestens eine Neigungssensor (10) als Beschleunigungssensor auf MEMS Basis (10) und/oder als Spannbandsensor realisiert ist.

5. Sensorsystem (100) gemäß einem der vorherigen Ansprüche, wobei die Berechnungseinheit (30) einen Kaimanfilter umfasst.

6. Sensorsystem (100) gemäß einem der vorherigen Ansprüche, wobei das Sensorsystem (100) eine Steuerung umfasst, die ausgebildet ist, um eine Aktorik zur Höhenregelung der Bohle (82) und/oder zur Neigungsregelung der Bohle (82) zu steuern.

7. Verfahren zum Ausgeben eines beschleunigungskompensierten Neigungssignals für einen Straßenfertiger (80) mit einer Bohle (82), mit folgenden Schritten:
Ermitteln einer Neigung der Bohle (82) und/oder einer mit der Bohle (82) gekoppelten Einrichtung mittels mindestens eines Neigungssensors (10) und Bereitstellen eines Neigungssignals;
Ermitteln einer an der Bohle (82) vorherrschenden Drehrate bzw. Neigungsänderung mittels eines Drehratensensors (20) und Bereitstellen eines Drehratensignals; und
Berechnen auf Basis des mindestens Neigungssignals und des Drehratensignals des beschleunigungskompensierten Neigungssignals und Ausgeben desselben; wobei der Drehratensensor (20) dazu ausgebildet ist, die Drehrate unabhängig von Querbeschleunigungen, die beim Ein- und Ausfahren der Bohle hervorgerufen werden, zu bestimmen; und wobei das Berechnen erfolgt, indem das Neigungssignal nach der Zeit abgeleitet wird und mit dem Drehratensignal verglichen wird, um anhand des Vergleichs zu ermitteln, ob der Bedarf besteht, das Neigungssignal zu korrigieren; und indem die Korrekturen des Neigungssignals dadurch erfolgt, dass das Drehratensignal über die Zeit integriert wird und nach Kombination mit dem Neigungssignal als korrigiertes Neigungssignal ausgegeben zu werden.

8. Straßenfertiger (80), mit folgenden Merkmalen:
einer Bohle (82); und
einem Sensorsystem (100) gemäß einem der Ansprüche 1 bis 7.

9. Straßenfertiger (80) nach Anspruch 8, wobei die Bohle (82) ausfahrbar ist.

10. Straßenfertiger (80) gemäß Anspruch 8 oder 9, wobei der mindestens eine Neigungssensor (10) und/oder der Drehratensensor (20) mechanisch mit der Bohle (82) gekoppelt sind.

11. Straßenfertiger (80) gemäß Anspruch 8, 9 oder 10, wobei der mindestens eine Neigungssensor (10) und/oder der Drehratensensor (20) auf einer Quertraverse (80q) des Straßenfertigers (80) angeordnet sind.

12. Straßenfertiger (80) gemäß Anspruch 8, 9, 10 oder 11, wobei der mindestens eine Neigungssensor (10) und der Drehratensensor (20) in einem gemeinsamen Gehäuse angeordnet sind.

13. Straßenfertiger (80) gemäß Anspruch 12, wobei die Berechnungseinheit (30) in dem gemeinsamen Gehäuse angeordnet ist.

14. Straßenfertiger (80) gemäß Anspruch 12 oder 13, wobei das gemeinsame Gehäuse mechanisch mit der Bohle (82) gekoppelt ist und/oder auf einer Quertraverse (80q) des Straßenfertigers (80) angeordnet ist.

## Claims

1. A sensor system (100) for a road finishing machine (80) having an extendable plank (82), comprising:
at least one inclination sensor (10) configured to determine an inclination of the plank (82) and/or of means coupled to the plank (82) and provide an inclination signal;
a rotation rate sensor (20) configured to determine a rotation rate, or change in inclination, present at the plank (82) and provide a rotation rate signal;
wherein the rotation rate sensor (20) is configured to determine the rotation rate irrespective of lateral accelerations caused when retracting and extending the plank; and
a calculation unit (30) configured to calculate and output an acceleration-compensated inclination signal on the basis of the inclination signal and the rotation rate signal, **characterized in that** calculating is performed by deriving the inclination signal in dependence on time and comparing same to the rotation rate signal in order to determine, by means of the comparison, whether the inclination signal has to be corrected; and by the correction of the inclination signal being performed by integrating the rotation rate signal over time and outputting same as a corrected inclination signal after combination with the inclination signal.

2. The sensor system (100) in accordance with claim 1, wherein the calculation unit (30) is configured to determine the lateral acceleration on the plank (82) and/or the lateral acceleration resulting from retracting or extending the plank (82).

3. The sensor system (100) in accordance with claim 1 or 2, wherein the rotation rate sensor (20) is realized as a gyro sensor, gyroscope sensor or rotation rate sensor based on MEMS.

4. The sensor system (100) in accordance with any of the preceding claims, wherein the at least one inclination sensor (10) is realized as an acceleration sensor based on MEMS (10) and/or as a taut-band sensor.

5. The sensor system (100) in accordance with any of the preceding claims, wherein the calculation unit (30) comprises a Kalman filter.

6. The sensor system (100) in accordance with any of the preceding claims, wherein the sensor system (100) comprises a controller configured to control actuators for regulating the height of the plank (82) and/or for regulating the inclination of the plank (82).

7. A method for outputting an acceleration-compensated inclination signal for a road finishing machine (80) having a plank (82), comprising the steps of:
determining an inclination of the plank (82) and/or of means coupled to the plank (82) by means of at least one inclination sensor (10) and providing an inclination signal;
determining a rotation rate, or change in inclination, present at the plank (82) by means of a rotation rate sensor (20) and providing a rotation rate signal; and
calculating the acceleration-compensated inclination signal on the basis of the at least one inclination signal and the rotation rate signal and outputting the same;
wherein the rotation rate sensor (20) is configured to determine the rotation rate irrespective of lateral accelerations caused when retracting and extending the plank; and wherein calculating is performed by deriving the inclination signal in dependence on time and comparing same to the rotation rate signal in order to determine, by means of the comparison, whether the inclination signal has to be corrected; and by the correction of the inclination signal being performed by integrating the rotation rate signal over time and, after combination with the inclination signal, outputting same as a corrected inclination signal.

8. A road finishing machine (80) comprising:
a plank (82); and
a sensor system (100) in accordance with any of claims 1 to 7.

9. The road finishing machine (80) in accordance with claim 8, wherein the plank (82) is extendable.

10. The road finishing machine (80) in accordance with claim 8 or 9, wherein the at least one inclination sensor (10) and/or the rotation rate sensor (20) is/are coupled mechanically to the plank (82).

11. The road finishing machine (80) in accordance with claim 8, 9 or 10, wherein the at least one inclination sensor (10) and/or the rotation rate sensor (20) is/are arranged on a transverse part (80q) of the road finishing machine (80).

12. The road finishing machine (80) in accordance with claim 8, 9, 10 or 11, wherein the at least one inclination sensor (10) and the rotation rate sensor (20) are arranged in a common housing.

13. The road finishing machine (80) in accordance with claim 12, wherein the calculation unit (30) is arranged in the common housing.

14. The road finishing machine (80) in accordance with claim 12 or 13, wherein the common housing is coupled mechanically to the plank (82) and/or arranged on a transverse part (80q) of the road finishing machine (80).

## Revendications

1. Système de capteur (100) pour un finisseur de route (80) avec une poutre extensible (82), aux caractéristiques suivantes:
au moins un capteur d'inclinaison (10) qui est conçu pour déterminer une inclinaison de la poutre (82) et/ou un dispositif couplé à la poutre (82) et pour fournir un signal d'inclinaison;
un capteur de vitesse de rotation (20) qui est conçu pour déterminer une variation de vitesse de rotation ou d'inclinaison prédominant à la poutre (82) et pour fournir un signal de vitesse de rotation;
dans lequel le capteur de vitesse de rotation (20) est conçu pour déterminer la vitesse de rotation de manière indépendante des accélérations transversales qui sont provoquées lors de la rétraction et de l'extension de la poutre; et
une unité de calcul (30) qui est conçue pour calculer et sortir, sur base du signal d'inclinaison et du signal de vitesse de rotation, un signal d'inclinaison compensé en accélération,
**caractérisé par le fait que** le calcul a lieu en ce que le signal d'inclinaison est dérivé selon le temps et comparé avec le signal de vitesse de rotation pour déterminer, à l'aide de la comparaison, s'il existe la nécessité de corriger le signal d'inclinaison; et en ce que la correction du signal d'inclinaison a lieu **par le fait que** le signal d'inclinaison est intégré dans le temps et est sorti, après combinaison avec le signal d'inclinaison, comme signal d'inclinaison corrigé.

2. Système de capteur (100) selon la revendication 1, dans lequel l'unité de calcul (30) est conçue pour déterminer l'accélération latérale à la poutre (82) et/ou pour déterminer l'accélération latérale résultant d'une rétraction ou d'une extension de la poutre (82).

3. Système de capteur (100) selon la revendication 1 ou 2, dans lequel le capteur de vitesse de rotation (20) est réalisé sous forme de capteur gyroscopique ou de capteur de vitesse de rotation à base de MEMS.

4. Système de capteur (100) selon l'une des revendications précédentes, dans lequel l'au moins un capteur d'inclinaison (10) est réalisé sous forme de capteur d'accélération à base de MEMS (10) et/ou sous forme de capteur à sangle de serrage.

5. Système de capteur (100) selon l'une des revendications précédentes, dans lequel l'unité de calcul (30) comporte un filtre de Kalman.

6. Système de capteur (100) selon l'une des revendications précédentes, dans lequel le système de capteur (100) comporte une commande qui est conçue pour commander un actionneur destiné à réguler la hauteur de la poutre (82) et/ou à réguler l'inclinaison de la poutre (82).

7. Procédé pour sortir un signal d'inclinaison compensé en accélération pour un finisseur de route (80) avec une poutre (82), aux étapes suivantes consistant à:
déterminer une inclinaison de la poutre (82) et/ou d'un dispositif couplé à la poutre (82) au moyen d'au moins un capteur d'inclinaison (10) et fournir un signal d'inclinaison;
déterminer une variation de vitesse de rotation ou d'inclinaison prédominante à la poutre (82) au moyen d'un capteur de vitesse de rotation (20) et fournir un signal de vitesse de rotation; et
calculer, sur base de l'au moins un signal d'inclinaison et du signal de vitesse de rotation, le signal d'inclinaison compensé en accélération et sortir ce dernier;
dans lequel le capteur de vitesse de rotation (20) est conçu pour déterminer la vitesse de rotation de manière indépendante des accélérations transversales qui sont provoquées lors de la rétraction et de l'extension de la poutre; et
dans lequel le calcul a lieu en ce que le signal d'inclinaison est dérivé selon le temps et comparé avec le signal de vitesse de rotation pour déterminer, à l'aide de la comparaison, s'il existe la nécessité de corriger le signal d'inclinaison; et en ce que la correction du signal d'inclinaison a lieu par le fait que le signal d'inclinaison est intégré dans le temps et est sorti, après combinaison avec le signal d'inclinaison, comme signal d'inclinaison corrigé.

8. Finisseur de route (80), aux caractéristiques suivantes:
une poutre (82); et
un système de capteur (100) selon l'une des revendications 1 à 7.

9. Finisseur de route (80) selon la revendication 8, dans lequel la poutre (82) est extensible.

10. Finisseur de route (80) selon la revendication 8 ou 9, dans lequel l'au moins un capteur d'inclinaison (10) et/ou le capteur de vitesse de rotation (20) sont couplés mécaniquement à la poutre (82).

11. Finisseur de route (80) selon la revendication 8, 9 ou 10, dans lequel l'au moins un capteur d'inclinaison (10) et/ou le capteur de vitesse de rotation (20) sont disposés sur une traverse (80q) du finisseur de route (80).

12. Finisseur de route (80) selon la revendication 8, 9, 10 ou 11, dans lequel l'au moins un capteur d'inclinaison (10) et le capteur de vitesse de rotation (20) sont disposés dans un boîtier commun.

13. Finisseur de route (80) selon la revendication 12, dans lequel l'unité de calcul (30) est disposée dans le boîtier commun.

14. Finisseur de route (80) selon la revendication 12 ou 13, dans lequel le boîtier commun est couplé mécaniquement à la poutre (82) et/ou est disposé sur une traverse (80q) du finisseur de route (80).
